(19) **Europäisches Patentamt / European Patent Office / Office européen des brevets**

(11) **EP 3 948 910 B1**

(12) **FASCICULE DE BREVET EUROPEEN**

(45) Date de publication et mention de la délivrance du brevet:
**18.02.2026 Bulletin 2026/08**

(21) Numéro de dépôt: **20723183.8**

(22) Date de dépôt: **23.03.2020**

(51) Classification Internationale des Brevets (IPC):
*H01G 11/58* (2013.01)      *H01G 11/54* (2013.01)
*H01G 11/26* (2013.01)      *H01G 11/84* (2013.01)
*H01G 11/82* (2013.01)      *H01G 11/52* (2013.01)

(52) Classification Coopérative des Brevets (CPC):
**H01G 11/82; H01G 11/26; H01G 11/52; H01G 11/54; H01G 11/58; H01G 11/84;** Y02E 60/13

(86) Numéro de dépôt international:
**PCT/FR2020/000064**

(87) Numéro de publication internationale:
**WO 2020/193875 (01.10.2020 Gazette 2020/40)**

(54) **PROCÉDÉ DE FABRICATION DE CONDENSATEURS ÉLECTROCHIMIQUES**

HERSTELLUNGSVERFAHREN VON ELEKTROCHEMISCHEN KONDENSATOREN

PROCESS OF MANUFACTURE OF ELECTROCHEMICAL CAPACITORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.03.2019 FR 1903042**

(43) Date de publication de la demande:
**09.02.2022 Bulletin 2022/06**

(73) Titulaire: **Nawah**
**13790 Rousset (FR)**

(72) Inventeurs:
• **ZIMMERMANN, Marc**
**13530 Trets (FR)**
• **GOISLARD DE MONSABERT, Thomas**
**83470 Saint Maximin la Sainte Beaume (FR)**

(74) Mandataire: **IXAS Conseil**
**22, avenue René Cassin**
**69009 Lyon (FR)**

(56) Documents cités:
| | |
|---|---|
| EP-A1- 3 082 181 | JP-A- 2000 150 319 |
| JP-A- 2013 140 783 | JP-A- H10 223 490 |
| US-A1- 2002 191 369 | US-A1- 2009 169 989 |
| US-A1- 2015 287 548 | |

**Description**

Domaine technique de l'invention

L'invention concerne le domaine des condensateurs électriques, et plus particulièrement celui des condensateurs électrochimiques à double couche. Il concerne plus précisément un procédé de fabrication d'un condensateur électrochimique qui facilite l'imprégnation des électrodes et du séparateur par un électrolyte visqueux.

Etat de la technique

Les (super)condensateurs électrochimiques à double couche sont connus depuis longtemps. Ils sont basés sur un mécanisme capacitif : les charges adsorbent sur une électrode en créant une double couche électrochimique. Plus précisément, ils comprennent une électrode négative et une électrode positive, séparées par un séparateur et baignant dans un électrolyte liquide. Ces différents éléments constitutifs sont logés dans un récipient qui doit être étanche du fait de la présence d'un électrolyte liquide. Si les électrodes et le séparateur sont tous des feuilles souples, elles peuvent être enroulées ; d'autres formes géométriques existent. Ces dispositifs sont aussi appelés « ultra-condensateurs » ; une présentation de base est donnée par exemple dans la brochure « *Product Guide Maxwell Technologies@ BOOSTCAP®* *Ultracapacitors* » publiée par la société Maxwell en 2009.

De manière classique, la fabrication d'un tel condensateur électrochimique fait tout d'abord intervenir une découpe des électrodes à des dimensions appropriées. Puis, on dispose mutuellement les électrodes et leur séparateur dans l'agencement géométrique souhaité. L'empilement ainsi formé est ensuite introduit dans un récipient ; ce récipient est alors rempli d'électrolyte liquide, puis scellée de manière à constituer une enveloppe étanche. Un tel procédé et dispositif sont décrits par exemple dans US 2009/169989 A1.

Le séparateur sépare électriquement les électrodes de polarité opposée, mais il doit être poreux pour laisser passer les ions qui se déplacent dans l'électrolyte. Afin d'obtenir une haute densité de puissance, les électrodes aussi sont poreuses, afin d'augmenter leur surface d'échange pour les réactions électrochimiques. Cela pose le problème de l'imprégnation du séparateur et des électrodes par l'électrolyte. Il est préférable que l'électrolyte liquide imprègne complètement à la fois le séparateur et les électrodes, de manière à garantir des performances optimales de la cellule. En particulier, une imprégnation incomplète peut induire une baisse des performances électriques. Dans ces conditions, le procédé de fabrication connu décrit ci-dessus implique cependant certains inconvénients, liés notamment aux contingences relatives à l'imprégnation.

En particulier, les possibilités géométriques du condensateur sont réduites. En d'autres termes, un tel condensateur ne peut pas adopter certaines formes, sauf à présenter des performances dégradées. Par ailleurs, ce procédé de fabrication est relativement long à mettre en oeuvre, voire impossible à réaliser, lorsque que l'électrolyte choisit présente une haute viscosité, ou bien lorsque les électrodes présentent de faibles caractéristiques de mouillabilité. En effet, dans ces cas, l'imprégnation du séparateur et des électrodes par l'électrolyte liquide peut prendre beaucoup de temps pour être complète, ou peut même rester incomplète.

Ce problème se pose notamment lorsque l'électrolyte est un liquide ionique ; de tels dispositifs sont décrits par exemple dans la publication « Supercapacitors utilizing ionic liquids » de A. Eftekhari, parue en 2017 dans la revue Energy Storage Materials, vol. 9, p. 46-69. Le document WO 2014/001212 (Evonik Litarion GmbH) propose un procédé dans lequel on met installe dans le récipient les électrodes et le séparateur, puis on ajoute un excédent d'électrolyte, on attend que l'imprégnation soit complète, et on soumet l'électrolyte à une force capable d'évacuer le surplus.

Le problème est connu aussi du domaine des batteries à ions de lithium, et plusieurs solutions ont été proposées. Les documents US 8,047,241 (Hibar Systems, Ltd), US 2015/0364746 (CMWTEC Technologie GmbH), US 2017/0005360 (Nissan Motor Co, Ltd) et WO 2012/069100 (Li-Tec Battery GmbH) proposent des machines de remplissage de batteries très complexes, capables de mettre sous vide l'enveloppe de la batterie. Dans une approche différente, W. Pfleging et J. Pröll ont proposé de structurer les surfaces des électrodes en formant des canaux parallèles par irradiation avec un faisceau laser (J. Materials Chemistry A 2014, p. 14918-14926) ; cela revient à ajouter au procédé une étape de fabrication supplémentaire.

Par ailleurs, s'il est souhaitable dans l'intérêt de la performance du dispositif que le volume du condensateur soit rempli complètement d'électrolyte, il est également souhaitable, compte tenu du coût de l'électrolyte, de minimiser le volume d'électrolyte.

Compte tenu de ce qui précède, l'invention vise à remédier à au moins certains inconvénients de l'art antérieur présenté ci-dessus.

Elle vise en particulier à proposer un procédé qui permet de fabriquer un condensateur électrochimique, susceptible d'adopter une variété importante de géométrie.

Elle vise également à proposer un tel procédé, qui est plus rapide à mettre en œuvre que dans l'art antérieur.

Elle vise en outre à proposer un tel procédé, qui peut être mis en œuvre avec des électrolytes liquides de viscosité élevée.

Elle vise enfin à proposer un tel procédé, qui peut être mis en œuvre avec des électrodes présentant une faible mouillabilité.

Objets de l'invention

Conformément à l'invention, au moins un des objectifs ci-dessus est atteint au moyen d'un procédé de fabrication d'un condensateur électrochimique, ledit condensateur électrochimique comprenant

- ◦ une enveloppe étanche,
- ◦ au moins un couple d'électrodes, chaque couple comprenant une électrode positive et une électrode négative,
- ◦ au moins un séparateur, chaque séparateur séparant ladite électrode positive et ladite électrode négative d'un couple d'électrodes, et
- ◦ un électrolyte liquide, reçu dans ladite enveloppe,

dans lequel procédé on introduit les électrodes et les séparateurs respectifs dans ladite enveloppe, puis on scelle des parois de ladite enveloppe,

ledit procédé étant caractérisé en ce qu'on imprègne d'abord au moins une électrode dite sèche d'au moins un couple d'électrodes avec ledit électrolyte, en dehors de ladite enveloppe, de manière à obtenir au moins une électrode dite imprégnée, puis, lors d'une étape dite d'évacuation,

- ◦ on met ladite électrode imprégnée en contact avec l'une des deux faces d'un séparateur sec, et optionnellement on met en contact l'autre des deux faces dudit séparateur sec avec l'autre électrode dudit couple d'électrodes, et
- ◦ on évacue une certaine quantité de l'électrolyte hors de ladite électrode imprégnée, de manière à obtenir une électrode dite finale et à imprégner avec au moins une partie de ladite quantité d'électrolyte le séparateur et, éventuellement, l'autre électrode dudit couple.

Selon d'autres caractéristiques de l'invention :

- **-** on introduit les électrodes imprégnées dans l'enveloppe, en particulier dans une enveloppe souple, puis on évacue au moins une partie de l'électrolyte.
- **-** on évacue l'électrolyte par mise sous vide de l'enveloppe.
- **-** on évacue l'électrolyte au moyen d'une action mécanique complémentaire, notamment une action de compression.
- **-** on découpe des électrodes sèches à leur dimension voulue, puis on réalise imprégnation.
- **-** on imprègne une ébauche, notamment un rouleau, destinée à former plusieurs électrodes, puis on découpe l'ébauche imprégnée, de manière à obtenir une pluralité d'électrodes imprégnées.
- **-** on évacue l'électrolyte hors de l'électrode imprégnée, puis on introduit les électrodes finales dans l'enveloppe, en particulier dans une enveloppe rigide.
- **-** on évacue l'électrolyte en enroulant la ou chaque électrode imprégnée sur elle-même.
- **-** la ou chaque électrode sèche présente une compressibilité comprise entre 20 % et 80 %.
- **-** la ou chaque électrode sèche présente une porosité comprise entre 40 % et 90%.
- **-** On imprègne l'électrode sèche de sorte que le rapport entre la masse de l'électrode imprégnée et la masse de l'électrode sèche est compris entre 1,1 et 5.
- **-** on imprègne au moins une électrode de chaque couple d'électrodes.
- **-** on imprègne l'ensemble des électrodes.

Conformément à l'invention, l'étape d'imprégnation des électrodes et de leur séparateur est réalisée en dehors de l'enveloppe, avant que cette dernière ne soit scellée et rendue étanche. À cet effet, l'invention tire avantageusement parti des caractéristiques de porosité élevée et de compressibilité, que présentent certains matériaux d'électrodes susceptibles d'être utilisés. De manière typique, une quantité appropriée d'électrolyte est choisie, de manière à imprégner les électrodes. À cet effet, on préfère que cette quantité permette de saturer les électrodes en électrolyte, tout en évitant qu'une fraction d'électrolyte ne soit chassée hors des pores de l'électrode. En d'autres termes, lors de cette étape de mouillage préalable, on préfère que le séparateur ne soit pas humidifié par l'électrolyte, en contact avec les électrodes. Une fois ce mouillage réalisé, on introduit les différents éléments constitutifs à l'intérieur de la poche, puis on compresse les électrodes, de manière que l'électrolyte soit partiellement chassé de ces électrodes et humidifie les séparateurs.

Le procédé conforme à l'invention trouve son application à des électrodes de différents types. À titre d'exemples non limitatifs, on citera tout d'abord l'assemblage de type « pouch cell », dans lequel les électrodes et le séparateur sont logés dans une poche souple ; un tel dispositif est décrit dans WO 2018/185419 (NawaTechnologies). Au sein de cette poche, ces électrodes et ce séparateur sont sensiblement disposés à plat. Dans ce cas, la découpe éventuelle des électrodes peut être effectuée après ou avant l'étape imprégnation au moyen de l'électrolyte. On forme alors un empilement entre les électrodes humidifiées et leur séparateur, en prenant avantageusement soin que ce dernier ne soit pas humidifié. Cet empilement est alors scellé à l'intérieur de la poche, sous atmosphère contrôlée. On réalise ensuite une compression sur le condensateur, ce qui permet d'humidifier le séparateur. Cette compression peut être réalisée de manière mécanique, par exemple grâce à un boîtier de compression, et/ou en mettant l'intérieur de la poche en dépression.

L'invention trouve également son application dans un assemblage de type « jelly roll cell », dans lequel les électrodes et le séparateur sont logés dans un récipient sensiblement rigide. Ces électrodes et le séparateur médian sont alors enroulés sur eux-mêmes, à la manière d'un colimaçon. Dans ce cas, les électrodes peuvent être fendues après ou avant l'étape d'imprégnation au moyen de l'électrolyte. Le séparateur est alors inséré entre les deux électrodes imprégnées en prenant avantageusement soin, comme dans l'exemple précédent, que ce séparateur ne soit pas lui-même humidifié. Les électrodes et le séparateur intercalaire sont alors soumis à une opération d'enroulement, durant laquelle on exerce une force de compression. Cela permet d'expulser une partie de l'électrolyte, hors des électrodes en direction du séparateur. L'enroulement ainsi formé est ensuite scellé à l'intérieur de la poche, qui est refermée de façon à constituer l'enveloppe étanche.

On notera qu'il est du mérite de la demanderesse d'avoir identifié l'origine des inconvénients, liés au procédé de fabrication de l'art antérieur. En particulier, la demanderesse a constaté que ces inconvénients sont notamment dus au fait que l'art antérieur prévoit une imprégnation, qui est effectuée postérieurement à la mise en place des électrodes et du séparateur à l'intérieur de la poche. Plus précisément, dans le procédé selon l'état de la technique on imprègne les éléments (électrodes et séparateurs) par un côté de la cellule (typiquement par le haut); l'électrolyte doit donc traverser une forte épaisseur de matériau pour imprégner totalement lesdits éléments.

Au contraire, conformément à l'invention, cette imprégnation est réalisée au préalable, et l'électrolyte n'aura à traverser que l'épaisseur d'une feuille représentant l'élément. Par conséquent, cela permet de conférer au condensateur final des géométries particulières, qui ne sont pas viables industriellement avec le procédé de fabrication de l'art antérieur. Par ailleurs, le procédé conforme à l'invention s'adapte parfaitement à un électrolyte de haute viscosité, ainsi qu'à des électrodes de faible mouillabilité. A titre d'exemple (non limitant), les liquides ioniques possèdent des avantages certains en tant qu'électrolytes pour supercondensateurs (non-inflammabilité, non-volatilité, stabilité électrochimique), mais possèdent l'inconvénient de présenter une forte viscosité à température ambiante (20°C). Leur utilisation dans un procédé de fabrication de l'art antérieur entraine un temps d'imprégnation allongé. L'invention permet de s'affranchir de cette limite. L'avantage du procédé selon l'invention est d'autant plus grand que la viscosité de l'électrolyte est élevée.

Dans le procédé selon l'invention, les deux électrodes du couple d'électrodes peuvent être identiques ou différentes. Si elles sont différentes, leur compressibilité et / ou leur épaisseur peuvent être identiques ou différentes, et de ce fait elles peuvent avoir une capacité d'absorption différente pour l'électrolyte. Dans un mode de réalisation de l'invention, l'une des électrodes est compressible et de forte épaisseur, et l'autre est mince et peu compressible. Dans ce cas, on imprègne l'électrode épaisse et compressible en dehors de l'enveloppe, pour qu'elle vienne mouiller ensuite le séparateur et l'autre électrode lors de la compression dans l'enveloppe.

De manière avantageuse, l'épaisseur des parties compressibles [cm], i.e. des électrodes et du séparateur, multiplié avec le taux effectif de compression [%], est au moins égal à la porosité moyenne des parties non compressibles [%] multiplié par l'épaisseur des parties non compressibles. Ainsi, le volume d'électrolyte [cm$^3$] évacué lors de l'étape d'évacuation est au plus égal au produit formé par l'épaisseur [cm] de l'électrode imprégnée, la compressibilité [%] de l'électrode, et sa surface [cm$^2$]. En pratique, ce volume [cm$^3$] correspond au produit formé par l'épaisseur [cm] de l'électrode imprégnée, le taux effectif de compression de l'électrode imprégnée [%], et sa surface [cm$^2$]. Le volume [cm$^3$] nécessaire pour imprégner le séparateur est égal au produit formé par la porosité [%] du séparateur, son épaisseur [cm], et sa surface [cm$^2$]. Le volume [cm$^3$] nécessaire pour imprégner la deuxième électrode du couple d'électrode est égal au produit formé par la porosité [%] de ladite deuxième électrode, son épaisseur [cm$^3$], et sa surface [cm$^3$]. Lors de l'étape d'évacuation, le volume à évacuer de l'électrode imprégnée doit être au moins égal au volume nécessaire pour imprégner le séparateur, plus, le cas échéant, le volume nécessaire pour imprégner la deuxième électrode. Ainsi, l'homme du métier peut sélectionner et dimensionner les électrodes et le séparateur.

Description des figures

L'invention va être décrite ci-dessous, en référence aux dessins annexés donnés uniquement à titre d'exemples non limitatifs, dans lesquels :

[Fig. 1] est une vue schématique, illustrant une première étape de réalisation d'un condensateur conforme à un premier mode de réalisation de l'invention.

[Fig. 2] est une vue schématique, illustrant une deuxième étape de réalisation du condensateur conforme au premier mode de réalisation de l'invention.

[Fig. 3] est une vue schématique, illustrant une troisième étape de réalisation du condensateur conforme au premier mode de réalisation de l'invention.

[Fig. 4] est une vue schématique, illustrant une variante de ce premier mode de réalisation.

[Fig. 5] est une vue schématique, illustrant une première étape de réalisation d'un condensateur conforme à un deuxième mode de réalisation de l'invention.

[Fig. 6] est une vue schématique, illustrant une deuxième étape de réalisation du condensateur conforme au deuxième mode de réalisation de l'invention.

[Fig. 7] est une vue de face, illustrant une variante supplémentaire de réalisation du condensateur conforme à l'invention.

[Fig. 8] est une vue de face, illustrant une autre variante supplémentaire de réalisation du condensateur conforme à l'invention.

[Fig. 9] est une vue de face, illustrant encore une autre variante supplémentaire de réalisation du condensateur conforme à l'invention.

Les signes de référence numériques suivants sont utilisés sur les figures et dans la description ci-dessous :

|  | Descriptif |  | Descriptif |
| --- | --- | --- | --- |
| 1 | Condensateur |  |  |
| 10 | Electrode sèche (positive) | 11 | Electrode 10 saturée d'électrolyte |
| 12 | Electrode finale (positive) |  |  |
| 20 | Electrode sèche (négative) | 21 | Electrode 20 saturée d'électrolyte |
| 22 | Electrode finale (négative) |  |  |
| 30 | Séparateur | 60 | Collecteur |
| 40 | Enveloppe (poche) | 50 | Bain d'électrolyte |
| 60 | Collecteur |  |  |
| 70 | Rouleau de matériau d'électrode | 71 | Rouleau 70 imprégné d'électrolyte |

Les références numériques à trois chiffres ont la même signification que ceux à deux chiffres, respectivement, ces derniers ayant été augmentés d'une ou plusieurs centaines.

Description détaillée

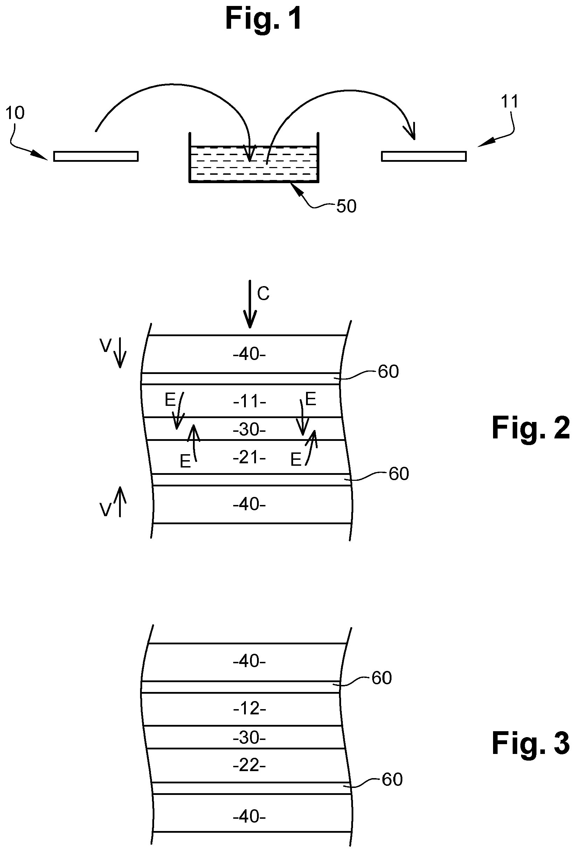

La figure 3 illustre différents composants, formant un condensateur électrochimique conforme à l'invention. On retrouve deux électrodes **12** et **22,** respectivement positives et négatives, un séparateur **30,** des collecteurs **60** ainsi qu'une poche **40** définissant un volume ouvert *V40*. Le condensateur comprend en outre d'autres éléments constitutifs, de type connu en soi, qui ne sont pas représentés sur cette figure. Il s'agit notamment de différentes bandes métalliques destinées à former des bagues de soudures.

Les électrodes, le séparateur et la poche sont par exemple de type connu en soi. L'électrode **22** négative peut être réalisée en carbone activé, l'électrode positive **12** en nanotubes de carbone verticalement alignés (abrégé VACNT), la poche **40** en matière plastique, et le séparateur **30** en polypropylène. La nature de ces différents composants n'est pas une caractéristique essentielle de l'invention. Par conséquent, leur matériau constitutif n'est pas décrit plus en détail à ce stade.

Conformément à l'invention, on prévoit d'imprégner au moins l'une des électrodes **10** ou **20,** au moyen d'un électrolyte liquide. Dans ce qui suit, on va décrire l'imprégnation de l'électrode de **10,** étant entendu que l'imprégnation de l'autre électrode est analogue. À cet effet, on prépare un bain **50** de cet électrolyte, qui est de tout type approprié. À titre d'exemple, cet électrolyte peut être un mélange liquide ternaire comprenant un monomère, un liquide ionique et un solvant.

L'électrode **10** est trempée dans le bain **50,** pendant une durée typiquement comprise entre 1 et 10 secondes. Au terme de cette étape de trempage, on obtient une électrode dite imprégnée, affecté de la référence **11** sur la figure 1. De manière avantageuse, cette électrode **11** est saturée, à savoir que sensiblement l'intégralité de ses pores est remplie au moyen de l'électrolyte. On préfère que l'électrolyte soit piégé par cette électrode. Ce terme piégeage signifie, dans le cadre de la présente invention, qu'un autre élément, tel que le séparateur, au contact de l'électrode imprégnée **11,** ne sera pas humidifié par l'électrolyte.

Afin de réaliser la saturation, telle que définie ci-dessus, l'homme du métier pourra jouer sur différents paramètres. Tout d'abord, il pourra prendre en compte la compressibilité de l'électrode. Ce paramètre peut être déterminé, par exemple, en mesurant la diminution d'épaisseur subie par l'électrode lorsqu'on lui applique une pression prédéterminée ; cette détermination peut être faite par exemple en analogie avec la norme ISO 11752, qui cependant a vocation à s'appliquer à des matériaux typiquement plus épais. L'homme du métier pourra également tenir compte de la porosité de l'électrode. Enfin, l'homme du métier pourra moduler le temps d'imprégnation en fonction de la viscosité de l'électrolyte du bain **50.**

A titre d'exemples non limitatifs :

- la compressibilité de l'électrode est comprise entre 10% et 80% ;
- la porosité de l'électrode est comprise entre 40% et 90% ;
- la viscosité de de l'électrolyte est comprise entre 0,34 cp et 30 cp (mesurée à la température de l'électrolyte lors de l'imprégnation).

Au terme de l'opération d'imprégnation, l'électrode **11** à piégé une certaine masse d'électrolyte. On note $M11/M10$ le rapport entre les masses respectives de l'électrode imprégnée **11** et de l'électrode dite sèche **10.** Ce rapport est typiquement compris entre 1,1 et 5.

L'électrode positive imprégnée **11** est alors positionnée sur le séparateur **30,** de manière connue en soi. Puis, on pose l'électrode négative sur le séparateur, également de manière habituelle ; cela est illustré sur la figure 2. Cette électrode négative peut, le cas échéant, être imprégnée selon une étape analogue à celle décrite ci-dessus, pour l'électrode positive **10.** On enveloppe ensuite les électrodes avec les séparateurs, puis on soude les collecteurs aux bandes métalliques des électrodes. Enfin, on procède au scellement des collecteurs **60** à la poche, et on procède au scellement de la poche. Une fois scellée, cette poche forme une enveloppe pour le condensateur électrochimique final, désigné dans son ensemble par la référence **1** sur la figure 2.

Conformément à l'invention, la poche est avantageusement mise sous vide. Cela crée alors une différence de pression, entre l'intérieur et l'extérieur de cette poche, qui génère une force de compression sur l'électrode imprégnée, matérialisée par la flèche V sur la figure 2. Par conséquent, cette compression permet d'expulser l'électrolyte initialement présent, hors des pores de l'électrode imprégnée, ce qui est matérialisé par la flèche E sur la figure 2. Cet électrolyte ainsi chassé rempli le volume intérieur de l'enveloppe, en mouillant en particulier le séparateur.

En complément à la force créée par la différence de pression mentionnée ci-dessus, on peut prévoir d'exercer une force complémentaire, par exemple de type mécanique, matérialisée par la flèche C sur la figure 3. Cela permet par conséquent d'ajuster de façon précise la valeur totale de la force exercée, qui est égale à la somme de la force due à la mise sous vide et de la force complémentaire ci-dessus. Sur les figures 1 à 3, la référence 10 désigne l'électrode dite sèche, la référence **11** désigne l'électrode dite imprégnée, alors que la référence **12** désigne l'électrode dite finale.

On notera que, de manière avantageuse, aucun volume supplémentaire d'électrolyte n'est ajouté, en dehors de celui servant à l'imprégnation de la ou des électrodes. Dans ces conditions, en référence à la figure 1, si une unique électrode est imprégnée, on fait en sorte qu'elle piège la quantité d'électrolyte prédéterminée, destinée à remplir le condensateur final.

Dans le cas où les deux électrodes sont imprégnées, on fait en sorte que la quantité d'électrolyte piégée par ces deux électrodes corresponde à la quantité totale d'électrolyte destinée à remplir le condensateur final. On peut prévoir que chaque électrode piège une même quantité d'électrolyte. À titre de variante, on peut prévoir que les quantités d'électrolyte piégées par les deux électrodes sont différentes. Cela est envisageable en particulier si ces deux électrodes présentent au moins un paramètre différent, tels que leur compressibilité, leur porosité, leur épaisseur ou encore composition. Dans l'exemple illustré, les deux électrodes sont imprégnées. De façon analogue aux références **10** à **12** ci-dessus, les références **20,21** et **22** désignent l'autre électrode respectivement à l'état sec, imprégné puis final.

L'invention inclut deux modes de réalisations principaux. Dans le premier mode, tel que décrit ci-dessus, on découpe chaque électrode à la dimension voulue, avant l'opération d'imprégnation. Afin de vérifier que la bonne quantité d'électrolyte est piégée, on peut par exemple peser chaque électrode immédiatement après l'opération d'imprégnation.

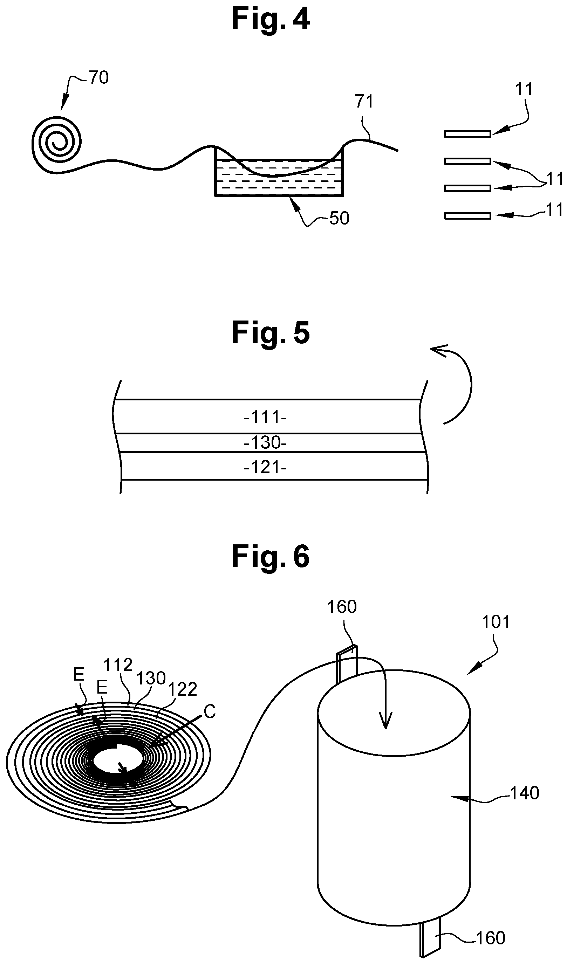

Dans le second mode de réalisation, chaque électrode est découpée à la dimension voulue, après l'opération d'imprégnation. Dans cet esprit, comme le montre la figure 4, on utilise par exemple une bande de matières en forme de rouleau **70,** destinée à former une pluralité d'électrodes. Ce rouleau est alors déroulé puis, avantageusement en continu, est soumis à l'imprégnation dans le bain **50.** Enfin, ce rouleau imprégné **71** est découpée, de manière à former les électrodes ayant emmagasiné une certaine quantité d'électrolyte. Afin de vérifier que la quantité souhaitée d'électrolyte et imprégné sur le rouleau, on peut par exemple procéder à des vérifications sur des échantillons donnés de ce rouleau.

Les figures 5 et 6 décrivent une seconde variante de réalisation, à savoir de type « jelly roll ». Sur ces figures, les éléments mécaniques analogues à ceux des figures du premier mode de réalisation y sont affectés des mêmes numéros de référence, augmentés du nombre 100.

De façon connue en soi, le condensateur **101** de ces figures 5 et 6 comprend deux électrodes **112** et **122,** respectivement positive et négative, un séparateur **130,** ainsi qu'un récipient **140.** Ce condensateur diffère de celui du premier mode de réalisation, tout d'abord en ce que le récipient **140** est sensiblement rigide, alors que la poche **40** est souple. Par ailleurs, dans ce second mode de réalisation, les électrodes et le séparateur sont enroulés sur eux-mêmes.

Dans l'art antérieur, on procède tout d'abord à l'enroulement des électrodes et du séparateur, puis à leur insertion dans le récipient rigide et, enfin, au remplissage au moyen de l'électrolyte. Conformément à l'invention, on imprègne tout d'abord au moins une des deux électrodes sèches au moyen de l'électrolyte, puis on dispose ces électrodes imprégnées **111** et **121** de part et d'autre du séparateur, à plat, comme le montre la figure 5

Ces électrodes et se séparateurs sont ensuite repliés sur eux-mêmes, par tous moyens appropriés, comme le montre la figure 6. Cette opération d'enroulement, ou de bobinage, crée une force de compression C' qui expulse l'électrolyte hors de l'électrode selon les flèches E', de manière à humidifier le séparateur. Ces différents éléments constitutifs, à savoir les électrodes **112,122** et le séparateur **130** désormais imprégné, sont ensuite introduits dans le volume intérieur du récipient rigide. De façon connue en soi, on scelle ce récipient, étape qui n'est pas représentée sur la figure 6, et on ajoute les collecteurs **160.**

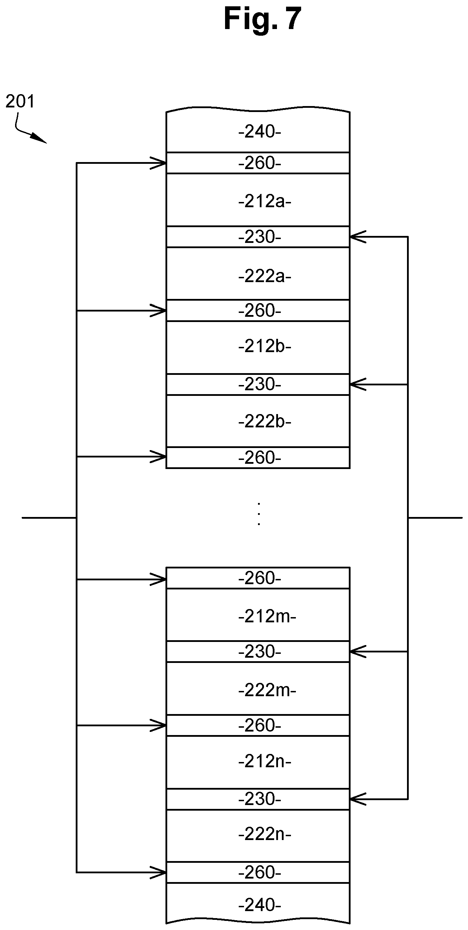

La figure 7 illustre une variante supplémentaire de réalisation de l'invention. Sur cette figure 7 les éléments mécaniques analogues à ceux du premier mode de réalisation y sont affectés des mêmes numéros de référence, augmentés du nombre 200.

Sur cette figure 7, on retrouve un condensateur qui est formé par une pluralité de couple d'électrodes, dont chacun comprend une électrode positive et une électrode négative, alors qu'un séparateur est intercalé entre ces deux électrodes. La réalisation de chaque couple est analogue, à ce qui a été décrit en référence au premier mode de réalisation.

Puis, on dispose chaque couple d'électrodes munies de son séparateur, les uns au-dessous des autres. On intercale un collecteur de courant entre les électrodes adjacentes, appartenant à deux couples en regard. On introduit cet empilement dans une poche, analogues à celles du premier mode de réalisation. Puis, de manière similaire à ce qui a été décrit ci-dessus, on met cette poche sous vide et, éventuellement, on exerce une force de compression complémentaire pour expulser l'électrolyte hors de chaque électrode imprégnée.

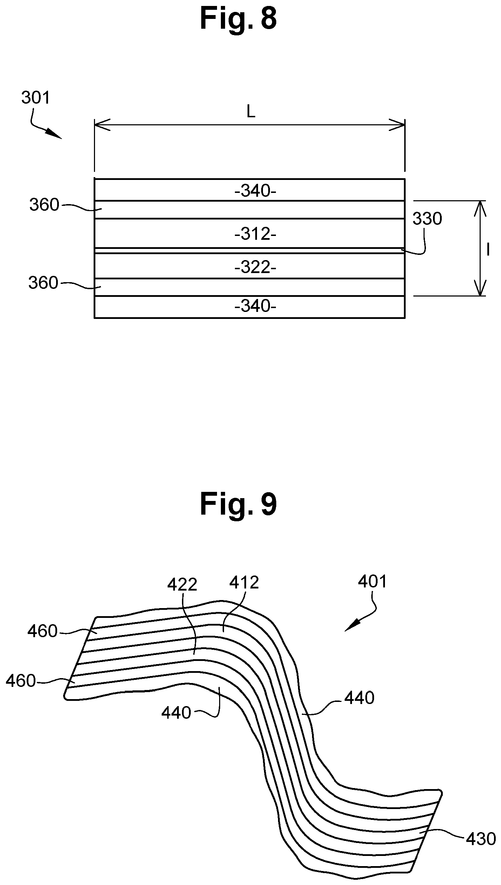

Les figures 8 et 9 illustrent des variantes de réalisation supplémentaire, mettant en avant les avantages spécifiques de l'invention. Sur ces figures 8 et 9 les éléments mécaniques analogues à ceux du premier mode de réalisation y sont affectés des mêmes numéros de référence, augmentés respectivement de 300 et 400.

Le condensateur de la figure 8 est obtenu de manière analogue à ce qui a été décrit en référence au premier mode de réalisation. Ce condensateur est remarquable, en ce qu'il présente un facteur de forme très important. En d'autres termes, sa dimension longitudinale, ou longueur, est très supérieure à sa dimension transversale, ou hauteur. De manière typique, le rapport entre cette longueur et cette hauteur peut être supérieur à 10.

Un tel facteur de forme n'est pas possible, de façon fiable, dans l'art antérieur. En effet, dans la technique connue, l'électrode doit être imprégnée au moyen de l'électrolyte par capillarité. Le temps nécessaire à cette imprégnation est particulièrement élevé. Par ailleurs, une telle imprégnation se révèle souvent peu satisfaisante. Au contraire, grâce à l'invention, le fait d'imprégner les électrodes au préalable permet de s'affranchir de ces problèmes techniques.

Le condensateur de la figure 9 est obtenu de manière analogue à ce qui a été décrit en référence au premier mode de réalisation. Ce condensateur est intégré dans une pièce courbée rigide à savoir que, à certains endroits, les électrodes et leur séparateur sont soumis à de fortes courbures mécaniques. À titre d'exemple, le rayon de courbure des électrodes et du séparateur est inférieur à 1 cm. Ces électrodes et le séparateur peuvent chacun comporter plusieurs tronçons, dont les concavités sont opposées, à savoir que la concavité d'un premier tronçon est tournée dans un premier sens, alors que la concavité d'un autre tronçon est tournée dans le sens opposé.

Un tel condensateur ne peut pas être obtenu de façon fiable, dans l'art antérieur, en effet, du fait de la présence de ces courbures significatives, l'électrode ne peut pas humecter correctement l'ensemble de la surface active du séparateur. Au contraire, grâce à l'invention, l'imprégnation préalable des électrodes permet de réaliser de telles courbures, tout en garantissant une imprégnation satisfaisante du séparateur. Le rayons de courbure des électrodes et du séparateur peut notamment être inférieur à 7 mm.

EXEMPLES

Exemple 1

Dans ce premier exemple on compare un condensateur fabriqué selon l'état de la technique et un condensateur fabriqué conformément à l'invention. On a utilisé les éléments constitutifs suivants :

- Deux électrodes de type VACNT, synthétisées par la société NAWA (comme décrit par exemple dans US 2016/0289826). L'épaisseur de chaque électrode est de 70 μm, alors que sa longueur et sa largeur sont respectivement égales à 3 cm et 2 cm. Ces électrodes présentent une porosité de 80 %. Par ailleurs, leur compressibilité est voisine de 30 %.

- Un électrolyte de type EMITFSI (éthylméthylimidazolium trifluorométhane-sulfonylimide) fabriqué par la société *Solvionic.*
- Un séparateur cellulosique, fabriqué par la société Dreamweaver. Ce séparateur présente une épaisseur de 30 μm, alors que sa longueur et sa largeur sont voisines de celles des électrodes présentées ci-dessus.
- Une enveloppe, formée par une poche souple, de type laminé aluminium-polyéthylène.

Un premier condensateur est formé à partir des composants ci-dessus, selon un procédé connu de l'état de la technique. En substance, les électrodes et le séparateur, placé entre ces dernières, sont introduits dans la poche souple. Cette dernière est alors remplie au moyen d'un volume de l'électrolyte, égal à 0,15 mL. Les parois de la poche sont alors mutuellement soudées sous une pression de 100 mbar, de sorte que cette poche forme une enveloppe étanche.

Un second condensateur est formé à partir des composants ci-dessus, selon un procédé conforme à l'invention, tel que décrit en référence aux figures 1 à 3. À cet effet, chaque électrode est imprégnée avec un volume d'électrolyte, égal à 0,03 mL. Le séparateur est intercalé entre ces électrodes imprégnées, puis l'ensemble est introduit dans la poche. Cette dernière est alors scellée, puis mise sous une pression de 100 mbar, ce qui entraîne l'expulsion de l'électrolyte hors des électrodes, de manière à imprégner le séparateur.

Ces deux condensateurs présentent des formes similaires, de type standard. Ainsi les deux parois de la poche, les deux électrodes et le séparateur sont disposés à plat les uns au-dessous des autres, comme sur la figure 3.

Pour chacun de ces condensateurs, on mesure l'impédance sur un potentiostat commercialisé par la société BIOLOGIC, à 0 V avec 10 mV d'amplitude, depuis 100 kHz à 0,1 Hz. La résistance équivalente série (ESR) définie comme la partie réelle de l'impédance complexe et la capacité définie par la relation : $-\dfrac{1}{2*\pi*f*Im(Z)}$ avec f la fréquence, et Im(Z) la partie imaginaire de l'impédance complexe, sont déterminés à une fréquence de 1 Hz.

On constate que les valeurs d'ESR sont voisines pour les 2 électrodes, puisque l'électrode fabriquée conformément à l'invention présente une valeur de 0,50 Ohm alors que l'électrode conforme à l'art antérieur présente une valeur de 0,48 Ohm. Par ailleurs, ces 2 électrodes présentent la même valeur de capacitance égale à 0,13 F

En outre, chacun des condensateurs a été démonté après fabrication. Cela a permis de vérifier que, dans les deux cas, le séparateur a été correctement imprégné.

Cet exemple comparatif montre qu'un condensateur, réalisé conformément à l'invention, présente des propriétés voisines de celles d'un condensateur de l'état de la technique, dans la mesure où les électrodes utilisées présentent une valeur de compressibilité suffisante.

Par conséquent, cela met en lumière que l'invention garantit une grande fiabilité de performances du condensateur. Il est possible de réaliser des condensateurs dont le facteur de forme est très élevé, comme celui de la figure 8, ou bien dont l'enveloppe présente des formes substantiellement courbes, comme celui de la figure 9.

On note que dans les électrodes de type VACNT, l'électrolyte est retenu par capillarité, à la manière d'une éponge. Cette retenue de l'électrolyte est réalisée de façon analogue pour des électrodes poreuses, autres que celles du type VACNT. Étant donné que l'imprégnation est opérée à l'extérieur des nanotubes de carbone, ces derniers n'étant pas substantiellement compressibles, une imprégnation interne des tubes n'est pas nécessaire, voire aurait un effet négatif.

Exemple 2

Dans ce second exemple on compare un condensateur fabriqué selon l'état de la technique et un condensateur fabriqué conformément à l'invention. On a utilisé les éléments constitutifs suivants :

- Deux électrodes de type carbone activé, synthétisées par la société Samwha ; l'épaisseur de chaque électrode est de 120 μm, alors que sa longueur et sa largeur sont respectivement égales à 2 cm et 3 cm. Ces électrodes présentent une porosité de 70 %. Leur compressibilité est voisine de 8 %.
- Un électrolyte de type EMITFSI (éthylméthylimidazolium trifluorométhanesulfonylimide) fabriqué par la société Solvionic.
- Un séparateur cellulosique, fabriqué par la société Dreamweaver. Ce séparateur présente une épaisseur de 30 μm, alors que sa longueur et sa largeur sont voisines de celles des électrodes présentées ci-dessus.
- Une enveloppe, formée par une poche souple, de type laminé aluminiumpolyéthylène.

Un premier condensateur est formé à partir des composants ci-dessus, selon un procédé connu de l'état de la technique. En substance, les électrodes et le séparateur, placé entre ces dernières, sont introduits dans la poche souple. Cette dernière est alors remplie au moyen d'un volume de l'électrolyte, égal à 0,2 mL. Les parois de la poche sont alors mutuellement soudées sous une pression de 100 mbar, de sorte que cette poche forme une enveloppe étanche.

Un second condensateur est formé à partir des composants ci-dessus, selon un procédé conforme à l'invention, tel que décrit en référence aux figures 1 à 4. À cet effet, chaque électrode est imprégnée avec un volume d'électrolyte, égale à 0,05 mL. Le séparateur est intercalé entre ces électrodes imprégnées, puis l'ensemble est introduit dans la poche. Cette dernière est alors scellée, puis mise sous une pression de 100 mbar, ce qui entraîne l'expulsion de l'électrolyte hors des électrodes, de manière à imprégner le séparateur.

Pour chacun de ces condensateurs, on mesure l'impédance sur un potentiostat commercialisé par la société BIOLOGIC, à 0 V avec 10 mV d'amplitude, depuis 100 kHz à 0,1 Hz. La résistance équivalente série (ESR) définie comme la partie réelle de l'impédance complexe et la capacité définie par la relation : $-\dfrac{1}{2*\pi*f*Im(Z)}$ avec f la fréquence, et Im(Z) la partie imaginaire de l'impédance complexe, sont déterminés à une fréquence de 1 Hz.

On constate que les valeurs d'ESR sont significativement différentes pour les 2 électrodes, puisque l'électrode conforme à l'invention présente une valeur de 9,10 alors que l'électrode conforme à l'art antérieur présente une valeur de 0,94. Par ailleurs, ces deux électrodes présentent des valeurs de capacité, qui sont significativement différentes. En effet, l'électrode conforme à l'invention présente une valeur de 0,09, alors que l'électrode réalisée selon l'art antérieur présent une valeur de 0,39.

En outre, chacun des condensateurs a été démonté après fabrication. Cela a permis de vérifier que, dans le cas du condensateur selon l'art antérieur, le séparateur a été correctement imprégné. En revanche, dans le cas du condensateur selon l'invention, l'imprégnation du séparateur n'a pas pu être réalisée correctement.

Cet exemple comparatif montre qu'un condensateur, réalisé conformément à l'invention, ne présente pas des propriétés satisfaisantes si les électrodes présentent une faible compressibilité.

Exemple 3

Dans ce troisième exemple on compare un condensateur avec un facteur de forme allongé fabriqué selon l'état de la technique et un condensateur fabriqué conformément à l'invention. On a utilisé les éléments constitutifs suivants :

- Deux électrodes de type VACNT, synthétisées par la société NAWA (voir exemple 1). L'épaisseur de chaque électrode est de 70 $\mu$m, alors que sa longueur et sa largeur sont respectivement égales à 9 cm et 2 cm. Ces électrodes présentent une porosité de 80 %. Par ailleurs, leur compressibilité est voisine de 30 %.
- Un électrolyte de type EMITFSI (éthylméthylimidazolium trifluorométhanesulfonylimide) fabriqué par la société *Solvionic.*
- Un séparateur cellulosique, fabriqué par la société Dreamweaver. Ce séparateur présente une épaisseur de 30 $\mu$m, alors que sa longueur et sa largeur sont voisines de celles des électrodes présentées ci-dessus.
- Une enveloppe, formée par une poche souple, de type laminé aluminiumpolyéthylène.

Un premier condensateur est formé à partir des composants ci-dessus, selon un procédé connu de l'État de la technique. En substance, les électrodes et le séparateur, placé entre ces dernières, sont introduits dans la poche souple. Cette dernière est alors remplie au moyen d'un volume de l'électrolyte, égale à 1 mL. Les parois de la poche sont alors mutuellement soudées sous une pression de 100 mbar, de sorte que cette poche forme une enveloppe étanche.

Un second condensateur est formé à partir des composants ci-dessus, selon un procédé conforme à l'invention, tel que décrit en référence aux figures 1 à 4. À cet effet, chaque électrode est imprégnée avec un volume d'électrolyte, égale à 0,15 mL. Le séparateur est intercalé entre ces électrodes imprégnées, puis l'ensemble est introduit dans la poche. Cette dernière est alors scellée, puis mise sous une pression de 100 mbar, ce qui entraîne l'expulsion de l'électrolyte hors des électrodes, de manière à imprégner le séparateur.

Pour chacun de ces condensateurs, on mesure l'impédance sur un potentiostat commercialisé par la société BIOLOGIC Biologic, à 0 V avec 10 mV d'amplitude, depuis 100 kHz à 0,1 Hz. La résistance équivalente série (ESR) définie comme la partie réelle de l'impédance complexe et la capacité définie par la relation : $-\dfrac{1}{2*\pi*f*Im(Z)}$ avec f la fréquence, et Im(Z) la partie imaginaire de l'impédance complexe, sont déterminés à une fréquence de 1 Hz.

On constate que les valeurs d'ESR sont significativement différentes pour les 2 électrodes, puisque l'électrode conforme à l'invention présente une valeur de 0,18 Ohm alors que l'électrode conforme à l'art antérieure présente une valeur de 5 Ohm. Par ailleurs, ces deux électrodes présentent des valeurs de capacité, qui sont significativement différentes. En effet, l'électrode conforme à l'invention présente une valeur de 0,31 F, alors que l'électrode réalisée selon l'art antérieur présent une valeur de 0,08 F.

En outre, chacun des condensateurs a été démonté après fabrication. Cela a permis de vérifier que, dans le cas du condensateur selon l'art antérieur, le séparateur n'a pas été correctement imprégné. En revanche, dans le cas du condensateur selon l'invention, l'imprégnation du séparateur a pu être réalisée correctement.

Cet exemple comparatif montre que la présente invention permet de réaliser des condensateurs avec des facteurs de forme allongés plus efficacement que l'art antérieur.

**Revendications**

1. Procédé de fabrication d'un condensateur (1) électrochimique, ledit condensateur électrochimique comprenant

   ○ une enveloppe (40) étanche,
   ○ au moins un couple d'électrodes, chaque couple comprenant une électrode positive et une électrode négative,
   ○ au moins un séparateur (30), chaque séparateur séparant ladite électrode positive et ladite électrode négative d'un couple d'électrodes, et
   ○ un électrolyte liquide, reçu dans ladite enveloppe,
   dans lequel procédé on introduit les électrodes et les séparateurs respectifs dans ladite enveloppe, puis on scelle des parois de ladite enveloppe,
   ledit procédé comprenant les étapes suivantes

   - lors d'une étape dite d'imprégnation, précédant l'introduction des électrodes et du séparateur dans ladite enveloppe, on imprègne d'abord au moins une électrode (10;20) dite sèche d'au moins un couple d'électrodes avec ledit électrolyte, en dehors de ladite enveloppe, de manière à obtenir au moins une électrode (11;21) dite imprégnée,
   - puis, lors d'une étape dit d'évacuation,

      ○ on met ladite électrode imprégnée (11;21) en contact avec l'une des deux faces d'un séparateur (30) sec, et optionnellement on met en contact l'autre des deux faces dudit séparateur sec avec l'autre électrode dudit couple d'électrodes, et
      ○ on évacue une certaine quantité de l'électrolyte hors de ladite électrode imprégnée, de manière à obtenir une électrode dite finale (12;22) et à imprégner avec au moins une partie de ladite quantité d'électrolyte le séparateur et, éventuellement, l'autre électrode dudit couple,

   et ledit procédé étant caractérisé en que :

      - on imprègne une ébauche, notamment un rouleau, destinée à former plusieurs électrodes, puis on découpe l'ébauche imprégnée, de manière à obtenir une pluralité d'électrodes imprégnées ;
      - on introduit les électrodes imprégnées et le(s) séparateur(s) dans l'enveloppe, en particulier dans une enveloppe souple, puis on évacue au moins une partie de l'électrolyte, de préférence par mise sous vide de l'enveloppe.

2. Procédé selon la revendication 1, dans lequel on évacue l'électrolyte au moyen d'une action mécanique complémentaire, notamment une action de compression.

3. Procédé selon l'une des revendications 1 à 2, dans lequel on découpe des électrodes sèches à leur dimension voulue, puis on réalise l'imprégnation.

4. Procédé selon la revendication 1, dans lequel on évacue l'électrolyte hors de l'électrode imprégnée, puis on introduit les électrodes finales dans l'enveloppe, en particulier dans une enveloppe rigide.

5. Procédé selon la revendication précédente, dans lequel on évacue l'électrolyte en enroulant la ou chaque électrode imprégnée sur elle-même.

6. Procédé selon l'une quelconque des revendications précédentes, dans lequel la ou chaque électrode sèche présente une compressibilité comprise entre 20 % et 80 %.

7. Procédé selon l'une quelconque des revendications précédentes, dans lequel la ou chaque électrode sèche présente une porosité comprise entre 40 % et 90%.

**8.** Procédé selon l'une quelconque des revendications précédentes, dans lequel on imprègne l'électrode sèche de sorte que le rapport entre la masse de l'électrode imprégnée et la masse de l'électrode sèche est compris entre 1,1 et 5.

**9.** Procédé selon l'une des revendications précédentes, dans lequel on imprègne au moins une électrode de chaque couple d'électrodes.

**10.** Procédé selon l'une des revendications précédentes, **caractérisé en ce qu'**on imprègne l'ensemble des électrodes.

**Patentansprüche**

**1.** Verfahren zur Herstellung eines elektrochemischen Kondensators (1), wobei der elektrochemische Kondensator Folgendes umfasst

- eine wasserdichte Hülle (40),
- mindestens ein Elektrodenpaar, wobei jedes Paar aus einer positiven Elektrode und einer negativen Elektrode besteht,
- mindestens einen Separator (30), wobei jeder Separator die positive Elektrode und die negative Elektrode eines Elektrodenpaares trennt, und
- einen flüssigen Elektrolyten, der in der besagten Hülle empfangen wird,
wobei in diesem Verfahren die Elektroden und die jeweiligen Separatoren in die Hülle eingeführt und anschließend die Wände der Hülle versiegelt werden,
wobei das Verfahren folgende Schritte umfasst :

- während eines als Imprägnierung bezeichneten Schritts, der der Einführung der Elektroden und des Separators in die Hülle vorausgeht, wird mindestens eine Elektrode (10;20) mindestens eines Elektrodenpaares, die als trocken bezeichnet wird, außerhalb der Hülle zunächst mit dem Elektrolyten imprägniert, um mindestens eine Elektrode (11;21), die als imprägniert bezeichnet wird, zu erhalten,
- sodann, während eines als Evakuierung bezeichneten Schritts

-- wird die besagte imprägnierte Elektrode (11; 21) mit einer der beiden Seitenflächen eines trockenen Separators (30) in Kontakt gebracht, und optional wird die andere der beiden Seitenflächen des trockenen Separators mit der anderen Elektrode des Elektrodenpaares in Kontakt gebracht, und
-- wird eine bestimmte Menge des Elektrolyten von der imprägnierten Elektrode abgelassen, um eine sogenannte Endelektrode (12;22) zu erhalten, und mit mindestens einem Teil dieser Elektrolytmenge wird der Separator und gegebenenfalls die andere Elektrode des Paares imprägniert,

und das besagte Verfahren ist **dadurch gekennzeichnet, dass** :

- ein Rohling, insbesondere eine Rolle, der zur Herstellung mehrerer Elektroden bestimmt ist, imprägniert wird, und anschließend der imprägnierte Rohling so zugeschnitten wird, dass eine Vielzahl von imprägnierten Elektroden entsteht ;
- die imprägnierten Elektroden und der/die Separator(en) in die Hülle, insbesondere in eine flexible Hülle, eingeführt und anschließend mindestens ein Teil des Elektrolyten evakuiert wird, vorzugsweise dadurch, dass an die Hülle ein Unterdruck angelegt wird.

**2.** Verfahren nach Anspruch 1, bei dem der Elektrolyt mittels einer ergänzenden mechanischen Einwirkung, insbesondere einer Kompressionswirkung, entfernt wird.

**3.** Verfahren nach einem der Ansprüche 1 bis 2, bei dem trockene Elektroden auf die erforderlichen Abmessungen zugeschnitten und anschließend imprägniert werden.

**4.** Verfahren nach Anspruch 1, bei dem der Elektrolyt aus der imprägnierten Elektrode evakuiert und anschließend die fertigen Elektroden in die Hülle, insbesondere in eine starre Hülle, eingeführt werden.

**5.** Verfahren nach dem vorhergehenden Anspruch, bei dem der Elektrolyt durch Aufwickeln der imprägnierten Elektrode oder jeder imprägnierten Elektrode um sich selbst evakuiert wird.

6. Verfahren nach einem der vorhergehenden Ansprüche, wobei die trockene oder jede trockene Elektrode eine Kompressibilität zwischen 20% und 80% aufweisen.

7. Verfahren nach einem der vorhergehenden Ansprüche, wobei die trockene oder jede trockene Elektrode eine Porosität zwischen 40% und 90% aufweisen.

8. Verfahren nach einem der vorhergehenden Ansprüche, wobei die trockene Elektrode so imprägniert wird, dass das Verhältnis zwischen der Masse der imprägnierten Elektrode und der Masse der trockenen Elektrode zwischen 1,1 und 5 liegt.

9. Verfahren nach einem der vorhergehenden Ansprüche, wobei mindestens eine Elektrode jedes Elektrodenpaares imprägniert wird.

10. Verfahren nach einem der vorhergehenden Ansprüche, **dadurch gekennzeichnet, dass** alle Elektroden imprägniert werden.


## Claims

1. A method for manufacturing an electrochemical capacitor (1), said electrochemical capacitor comprising

   - a waterproof envelope (40),
   - at least one pair of electrodes, each pair comprising a positive electrode and a negative electrode,
   - at least one separator (30), each separator separating said positive electrode and said negative electrode of a pair of electrodes, and
   - a liquid electrolyte, received in said envelope,
   in which method the electrodes and the respective separators are introduced into said envelope, then the walls of said envelope are sealed,
   said method comprising the following steps :

      - during a step called impregnation which precedes the introduction of the electrodes and the separator in said envelope, at least one electrode (10;20), called dry, of at least one electrode pair is first impregnated with said electrolyte, outside of said envelope, so as to obtain at least one electrode (11;21) called impregnated,

   then, during a stage called evacuation,

      - said impregnated electrode (11; 21) is brought into contact with one of the two faces of a dry separator (30), and optionally the other of the two faces of said dry separator is brought into contact with the other electrode of said electrode pair, and
      - a certain quantity of the electrolyte is evacuated from said impregnated electrode, so as to obtain a so-called final electrode (12;22) and to impregnate with at least a part of said quantity of electrolyte the separator and, possibly, the other electrode of said couple,

   and said method being **characterized in that** :

      - a blank, in particular a roll, intended to form several electrodes is impregnated, and then the impregnated blank is cut so as to obtain a plurality of impregnated electrodes ;
      - the impregnated electrodes and the separator(s) are introduced into the envelope, in particular into a flexible envelope, and then at least part of the electrolyte is removed, preferably by vacuuming the envelope.

2. Method according to claim 1, wherein the electrolyte is removed by means of a complementary mechanical action, in particular a compression action.

3. Method according to any one of claims 1 to 2, in which dry electrodes are cut to their required dimensions, and then impregnation is carried out.

4. Method according to claim 1, wherein the electrolyte is removed from the impregnated electrode, and then the final electrodes are introduced into the envelope, in particular into a rigid envelope.

**5.** Method according to the preceding claim, wherein the electrolyte is removed by winding the impregnated electrode or each impregnated electrode around themselves.

**6.** Method according to any one of the preceding claims, wherein the dry electrode or each electrode has a compressibility of between 20% and 80%.

**7.** Method according to any one of the preceding claims, wherein the dry electrode or each dry electrode has a porosity of between 40% and 90%.

**8.** Method according to any one of the preceding claims, wherein the dry electrode is impregnated such that the ratio between the mass of the impregnated electrode and the mass of the dry electrode is between 1.1 and 5.

**9.** Method according to any one of the preceding claims, wherein at least one electrode of each pair of electrodes is impregnated.

**10.** Method according to any one of the preceding claims, **characterized in that** all the electrodes are impregnated.

# Fig. 1

# Fig. 2

# Fig. 3

# Fig. 4

# Fig. 5

# Fig. 6

# Fig. 7

201

| -240- |
|---|
| -260- |
| -212a- |
| -230- |
| -222a- |
| -260- |
| -212b- |
| -230- |
| -222b- |
| -260- |

:

| -260- |
|---|
| -212m- |
| -230- |
| -222m- |
| -260- |
| -212n- |
| -230- |
| -222n- |
| -260- |
| -240- |

# Fig. 8

# Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009169989 A1
- WO 2014001212 A
- US 8047241 B
- US 20150364746 A
- US 20170005360 A
- WO 2012069100 A
- WO 2018185419 A
- US 20160289826 A

**Littérature non-brevet citée dans la description**

- **A. EFTEKHARI**. Supercapacitors utilizing ionic liquids. *Energy Storage Materials*, 2017, vol. 9, 46-69
- *J. Materials Chemistry A*, 2014, 14918-14926